# EUROPEAN PATENT SPECIFICATION

(11) **EP 1 321 746 B1**
(45) Date of publication and mention of the grant of the patent: **10.08.2011**
(21) Application number: 02080267.4
(22) Date of filing: 13.12.2002
(51) Int. Cl.: G01F 1/00, G01F 15/00, G01F 1/28

(54) **Valve for regulating and measuring the flow rate of a fluid**
Ventil zum Regulieren und Messen des Durchflusses eines Fluids
Soupape pour le réglage et la mesure du débit d'un liquide

(30) Priority: 20.12.2001 IT MI20002725
(43) Date of publication of application: 25.06.2003
(73) Proprietor: WATTS INDUSTRIES ITALIA S.r.l., Bolzano (IT)
(72) Inventor: Motta, Renato, Biassono (Mi) (IT); Saini, Mauro, Milano (IT)
(74) Representative: Raimondi, Margherita

(56) References cited:
- EP-A- 0 949 486
- EP-A- 1 130 364
- DE-A- 4 325 737
- DE-U- 29 806 215

## Description

The present invention relates to a valve for regulating and measuring the flow rate of a fluid through a header and a branch duct inside the said header, in which the means for shutting off the fluid are independent of the measuring instrument during their movement in the axial direction towards/away from the branch duct and the fluid shut-off means have openings for entry, in the radial direction, of the said fluid into the branch duct.

It is known in the technical sector relating to fluid distribution networks that there exists the need to provide multiple-path header elements for delivery/return of the fluid towards/from the end users; an example of these applications consists in the water supply piping systems for heating plants, in particular of the underfloor panel type.

It is also known that each of the piping branches which leaves the header must be provided with a valve for shutting off and regulating the flow so as to be able to compensate for the different losses in head which occur in the different panels because of their specific size and their distance from the distribution header. Also known are valves which are applicable to said piping systems and are able to perform regulation of the flow rate as well measurement of the latter, said measurement being shown on a calibrated scale present on the valve body.

Examples of these valves are for example known from DE 35 09 718 which describes a valve which, although performing correcting its dual function (regulation/measurement), nevertheless has a limitation due to the fact that, during regulation, the pressure detecting element is movable in the axial direction together with the closing body having the graduated scale from which the measurement is read off. This means that, in order to achieve a constant measurement during variation in the flow rate (greater opening/closing of the obturator) the measuring duct must necessarily be realised with a cylindrical shape. This cylindrical shape gives rise, however, to the drawback consisting in the fact that, in these conditions, it is not possible to obtain a substantially linear scale of measurement, which results in a very densely arranged reading scale with obvious difficulty in correct reading by the user.

In addition, it is known that, in the said systems, the measurement/regulating element (flowmeter) is arranged on the return branch and the fluid shut-off valve with electrically and/or pneumatically controlled actuator and/or the like is arranged on the delivery branch.

In this way, however, the main valve operates with the flow directed in the direction of closure of the valve and under high pressure conditions irreversible closing of the valve with consequent interruption in the heating could also occur.

It is thus possible to envisage arranging the flowmeter on the delivery branch and the shut-off valve on the return branch, but this solution encounters difficulties owing to the fact that the flowmeters of the known type are suitable for operation on the return branch or with the fluid flow which enters into the distribution duct of the header, this producing turbulence and cavitation which are the cause of noise and vibration of the measuring instrument which is no longer able to provide a precise measurement.

In order to solve this type of problem, DE-U-9404156 suggests providing a constriction in the region of the aperture for entry of the fluid into the valve branch duct.

This results, however, in a valve design which is complicated, costly and does not solve the problems of the measuring precision and linearity of the reading on the corresponding instrument.

Further prior art according to the preamble of claim 1 is known from EP 1 130 364 and EP 0 949 486, while means to adjust the flow rate of the fluid in consequence of a rotation only of the means themselves are known from DE 298 06 215 and DE 43 25 737.

The technical problem which is posed, therefore, is that of providing a valve for shutting off and regulating the flow rate in fluid distribution piping, with measuring instrument and display of the value of the said flow rate incorporated, which is suitable for installation on the user delivery branch of the system and allows efficient regulation and measurement of the flow rate, with an indication of the measurement which is as precise and as linear as possible.

Within the scope of this problem a further requirement is that the valve should consist of a reduced number of parts and should be easy and low-cost to manufacture and assemble.

These technical problems are solved according to the present invention by a valve for regulating and measuring the flow rate of a fluid through a header and a branch duct inside the said header according to the characteristics of claim 1.

Further details may be obtained from the following description of a non-limiting example of embodiment of the invention provided with reference to the accompanying drawings, in which:
- Figure 1 is a view, partially sectioned along a vertical plane, of an example of embodiment of the valve according to the invention in the closed valve condition;
- Figure 2 is a cross-section, similar to that of Fig. 1, in the open valve condition; and
- Figure 3 is a detailed view of the opening for radial entry of the fluid into the branch duct.

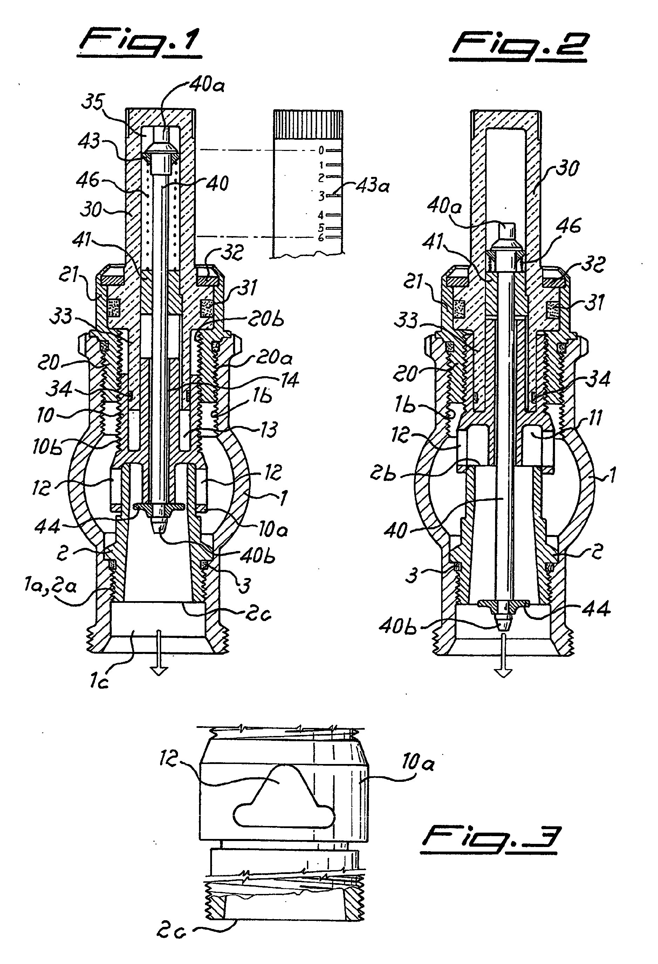

As illustrated in Fig. 1, a header 1 has at least one distribution duct 2 having a substantially frustoconical shape, with a conicity from the header 1 towards the delivery branch 1c of the system, and extending inside the header in a direction substantially transverse to that of the fluid flow; in the example according to the figure, the distribution duct 2 is integrally joined to the header 1 by means of a connection comprising screw 2a / female thread 1a with a sealing ring 3 arranged in between.

The free edge 2b corresponding to the smaller base of the distribution duct 2 forms the inlet aperture of the valve, while the opposite aperture 2c forms the outlet of the valve, the flow of the fluid therefore occurring from the header 1 to the distribution duct 2 in the direction of the said delivery branch 1c.

The opening of the aperture 2b may be regulated by means of the head 10a of a obturator 10 which is substantially cylindrical and has an external thread 10b suitable for mating with the female thread 20b of a connection piece 20 forming the element for connecting the measuring instrument to the header 1, as will be further explained below.

The said head 10a of the obturator 10 has the form of a cylindrical bell, with the cavity 11 directed towards the distribution duct 2; the circumferential surface of said head 10a is provided with openings 12 able to allow entry of the fluid into the branch duct in a radial direction.

As illustrated in Fig. 3, said openings have preferably a substantialy triangular shape with the base arranged towards the outlet aperture 2c of the branch duct 2, so as to obtain a reduction in the flow rate in accordance with the actuation of the valve during closure thereof. In a preferred embodiment the base of the opening 12 has a widened portion in the circumferential direction with a rounded profile.

In addition to this, the particular constructional form of the fluid entry apertures allow an improvement in the regulation and reading precision of the instrument over the whole of its regulating and measuring range.

The obturator 10 has a coaxial through-duct 14 and an annular seat 13 extending over a suitable section in the axial direction on the opposite side to that of the bell 11.

The connection piece 20 has, in turn, an external thread 20a able to mate with a corresponding female thread 1b of the header 1.

On the opposite side, axially, to said thread 1b, the connection piece 20 extends in the form of a cover 21 on which a stem 30, which is internally hollow, is mounted, said stem being axially inserted inside said cover 21 with the arrangement of an O-ring sealing element 31 in between and axially retained on the cover 21 by a reaction washer 32 inserted in a special seat in the cover.

The end 33 of the stem 30 inside the header 1 has a form designed to allow mating in the axial direction with the corresponding seat 13 of the obturator 10, to which it is constrained with the arrangement of a sealing element 34 in between.

The axial cavity 35 of the stem 30 has, inserted inside it, a movable rod 40 guided by a bush 41 integral with the walls of the said cavity 35.

Said rod 40 extends axially through the said duct 14 of the obturator 10 as far as the inside of the distribution duct 2 and is movable axially with respect to the stem 30 from an upper end-of-travel position against the external head of the stem 30 to a bottom end-of-travel position defined by a fixed annular contact element 41.

The rod 40 basically forms the actual measuring instrument of the valve and, for this purpose, is provided at its opposite ends, respectively outside 40a and inside 40b the header 1, with a first annular element 43, forming the measurement indicator, and a second annular element 44, forming the element which opposes the flow of the fluid and against which the latter exerts the pressure which determines the measurement of the flow rate.

The reading of the measurement is performed along a graduated scale 43a, which is printed on the external surface of the stem 30; so that the relative position of the indicator 43 with respect to the graduated scale 43a is visible from the outside, the stem part outside the header is conveniently made of transparent material.

A spring 46, which is coaxially arranged on the rod 40, is arranged between the said indicator element 43 and the guide bush 41 and opposes the free falling movement of the said rod, producing at the same time the calibrating action of the instrument.

The operating principle of the valve is as follows:
- firstly the connection piece 20 is screwed and fixed onto the header 1 by means of the connection consisting of screw 20a and female thread 1b;
- the stem 30 is then rotated so as to bring the bell 10a of the obturator 10 into the axial position for closing the aperture 2b of the connection duct 2 (Fig. 1);
- in this condition the spring 46 keeps the indicator 43 in the zero position of the graduated scale 43a, confirming the absence of flow;
- subsequent rotation of the hollow stem 30 causes the simultaneous rotation of the obturator 10 which is rotationally constrained to the stem; during its rotation, the obturator 10 reacts with the connections comprising screw 10b / female thread 20b and screw 20a / female thread 1b which cause raising thereof in the axial direction with consequent raising of the bell 10a (Fig. 2) and opening of the duct 2 inside which fluid form the header 1 starts to flow.

Acting on the reaction disk 44, the fluid causes the rod 40 to retract against the action of the spring 46, producing a corresponding displacement of the indicator 43 along the graduated scale 43a (Fig. 2);
- continuing rotation of the stem will result in the reading corresponding to the nominal flowrate value being reached and rotation will be stopped.

It must be emphasized how, during regulation of the flow rate, the axial displacement of the obturator 10 does not produce a corresponding axial displacement of the measuring instrument, which retains its predefined zero position.

It must also be pointed out how the bell 10a covers the external surface of the branch duct 2 with a minimum tolerance so as to allow relative sliding of the two surfaces.

This tolerance does not influence either the precision of the measurement nor the sealing action of the valve since said sealing action is obtained by means of frontal contact of the internal surface of the bell 10a and the free annular edge of the branch duct (Fig. 1). In addition to this, the displacement of the annular element 43 towards a larger section of the duct 2 following an increase in the flow rate (greater opening of the valve) produces an increase in the measuring cross-section with the increase in the said flow rate; this makes it possible to obtain a more linear measurement and therefore a more widely distributed indication scale on the external surface of the stem, greatly improving the ease and precision of reading by the user.

As a result of the particular circumferential arrangement of the openings 12 which produce entry of the fluid into the branch duct in a radial direction, it is possible to avoid the need to have to direct the flow of the fluid twice so that it is parallel to the longitudinal axis of the valve, as envisaged by the prior art where entry of the fluid occurs in a direction substantially parallel to the axial direction and results in the need for anti-cavitation means such as constrictions and the like.

It is envisaged, moreover, that the regulating and measurement valve according to the invention may be formed with a connection duct 2 which is overturned, namely having the larger base of the frustoconical form arranged inside the header 1: in this configuration the valve may be arranged on the return duct of the system and operate with a fluid flow from the return duct to the said header 1.

## Claims

1. Valve for regulating and measuring the flow rate of a fluid, comprising
- a header (1) through which fluid flow,
- a branch duct (2, 2b) joined to the header (1) and extending inside said header (1) in a direction transverse to that of fluid flow, said branch duct having an inlet aperture (2b) and an outlet (2c),
- means (10, 10a) for shutting off the inlet aperture (2b) of the branch duct (2), which are axially movable, said means (10, 10a) having a coaxial through-duct (14) and consisting of an obturator (10) which has a free end in the form of a cylindrical bell (10a),
- rotatable actuating means (30), for axially moving said means (10, 10a) for shutting of the inlet aperture (2b) of the branch duct (2), said actuating means (30) comprising an axial cavity (35) and being made of transparent material,
whereby said cylindrical bell (10a) is axially moved in a position closing the inlet aperture (2b) of the branch duct (2) by rotating the actuating means (30), the valve further comprises means (40, 44, 46) for detecting the pressure exerted by the fluid flow,
having:
-- spring means (46),
-- an axially movable rod (40) inserted inside the axial cavity (35) and extending axially through said coaxial through-duct (14) and inside the branch duct (2,2b), said rod (40) is provided at its opposite ends with measurement indicator (43) and an element (44) whereupon the flow of the fluid acts, causing the rod (40) to move axially against the action of the spring means (46),
the valve further comprising an instrument (43,43a) for measuring the flow rate of the fluid having:
-- the measurement indicator (43), and
-- a scale (43) on the external surface of said actuating means (30),
**characterized in that** the circumferential surface of said bell (10a)is provided with openings (12) for entry of the fluid from the header (1) inside the branch duct (2) in a radial direction,
the bell (10a) being axially moved to open the inlet aperture (2b) of the branch duct (2) by rotating the actuating means (30),
whereby the bell (10a) covers the external surface of the branch duct (2) and regulation of the flow rate is determined by an axial displacement of said openings (12) with respect to the external surface of the branch duct (2).

2. Valve according to Claim 1, **characterized in that** said branch duct (2) has a frustoconical form.

3. Valve according to Claim 2, **characterized in that** the larger base of the frustoconical duct is arranged on the side where the delivery (1c) is located.

4. Valve according to Claim 2, **characterized in that** the larger base of the frustoconical duct is arranged inside the header (1).

5. Valve according to Claim 1, **characterized in that** the seal in the closed valve conditions is performed by the frontal contact between the internal surface of the bell of the obturator and the free annular edge of the branch duct.

6. Valve according to Claim 1, **characterized in that** said obturator (10) has an annular seat (13) extending along a suitable section in the axial direction, on the opposite side to that of the bell.

7. Valve according to Claim 6, **characterized in that** said annular seat (13) has radial projections.

8. Valve according to Claim 1, **characterized in that** said obturator (10) has an external thread (10b) able to mate with the female thread (20b) of a connection piece (20) forming the element connecting the measuring instrument to the header (1) and in turn fixed on the said header by means of a screw/female thread connection.

9. Valve according to Claim 1, **characterized in that** said means for actuating the shut-off means (10,10a) consist of an internally hollow stem (30), the free end of which outside the valve has the graduated scale (43a) of the measuring instrument (43).

10. Valve according to Claim 1, **characterized in that** the end (33) of the stem (30) inside the header (1) has longitudinal grooves (30) suitable for allowing mating with the corresponding annular projections (13a) of the obturator seat (13).

11. Valve according to Claim 1, **characterized in that** said actuating means (30) and obturator (10) are connected to the header (1) by means of a connection piece (20) which can be fixed to the said header by means of a connection comprising screw (20a) and female thread (1b).

12. Valve according to Claim 11, **characterized in that** said means (30) for actuating the obturator (10) are axially constrained to said connection piece (20) by means of a reaction washer (32) inserted in a special seat in the cover (21) of the said connection piece.

13. Valve according to Claim 1, **characterized in that** said openings (12) in the circumferential surface of the bell (10a) of the obturator (10) have a substantially triangular shape.

14. Valve according to Claim 13, **characterized in that** said openings (12) have a base arranged on the side corresponding to outlet aperture (2c) of the branch duct (2).

15. Valve according to Claim 14, **characterized in that** said base of the opening (12) has a widened portion in the circumferential direction.

16. Valve according to Claim 15, **characterized in that** said widened portion of the base of the opening (12) has a rounded profile.

## Patentansprüche

1. Ventil zum Regulieren und Messen der Durchflussrate eines Fluids umfassend
- einen Verteilerkopf (1), durch welchen ein Fluid fliesst,
- ein Zweigrohr (2,2b), welches mit dem Verteilerkopf (1) verbunden ist und im Innern des Verteilerkopfs (1) in einer Richtung quer zu derjenigen des Fluidflusses verläuft, wobei das Zweigrohr eine Eingangsöffnung (2b) und einen Auslass (2c) hat,
- Mittel (10,10a) zum Absperren der Eingangsöffnung (2b) des Zweigrohrs (2), die axial bewegbar sind, wobei die Mittel (10,10a) einen koaxialen Durchgangskanal (14) haben und aus einem Absperrorgan (10) bestehen, das ein freies Ende in Form einer zylinderförmigen Glocke (10a) hat,
- drehbare Betätigungsmittel (30) zum axialen Verschieben der Mittel (10,10a) zum Absperren der Eingangsöffnung (2b) des Zweigrohrs (2), wobei die Betätigungsmittel (30) einen axialen Hohlraum (35) umfassen und aus einem transparenten Material hergestellt sind,
wobei die zylinderförmige Glocke (10a) durch Drehen der Betätigungsmittel (30) axial in eine Position verschoben wird, welche die Eingangsöffnung (2b) des Zweigrohrs (2) schließt,
wobei das Ventil zusätzlich Mittel (40,44,46) zum Ermitteln des Drucks umfasst, der durch den Fluidfluss ausgeübt wird, umfassend
-- Federmittel (46),
-- eine axial bewegbare Stange (40), welche im Innern des axialen Hohlraums (35) eingesetzt ist und sich axial durch den koaxialen Durchgangskanal (14) und im Innern des Zweigrohrs (2,2b) erstreckt, wobei die Stange an ihren entgegengesetzten Enden mit einem Messwertanzeiger (43) und einem Element (44) versehen ist, auf welches der Fluidfluss wirkt und veranlasst, dass die Stange (40) sich gegen die Wirkung der Federmittel (46) axial bewegt,
wobei das Ventil zusätzlich ein Instrument (43,43a) zum Messen der Durchflussrate des Fluids enthält, umfassend:
-- den Messwertanzeiger (43), und
-- eine Skala (43a) auf der Aussenfläche der Betätigungsmittel (30),
**dadurch gekennzeichnet, dass** die Umfangsoberfläche der Glocke (10a) mit Öffnungen (12) zum Einlassen des Fluids vom Verteilerkopf (1) in das Zweigrohr (2) in einer radialen Richtung versehen ist,
wobei die Glocke (10a) durch Drehen der Betätigungsmittel (30) axial verschoben wird, um die Eingangsöffnung (2b) des Zweigrohrs (2) zu öffnen,
wobei die Glocke (10a) die Aussenfläche des Zweigrohrs (2) umhüllt und die Regulierung der Durchflussrate durch eine axiale Verschiebung der Öffnungen (12) relativ zur Aussenfläche des Zweigrohrs (2) bestimmt wird.

2. Ventil nach Anspruch 1, **dadurch gekennzeichnet, dass** das Zweigrohr (2) eine kegelstumpfartige Form hat.

3. Ventil nach Anspruch 2, **dadurch gekennzeichnet, dass** die größere Unterseite des kegelstumpfartigen Rohrs auf der Seite angeordnet ist, wo sich der Abfluss (1c) befindet.

4. Ventil nach Anspruch 2, **dadurch gekennzeichnet, dass** die größere Unterseite des kegelstumpfartigen Rohrs im Innern des Verteilerkopfs (1) angeordnet ist.

5. Ventil nach Anspruch 1, **dadurch gekennzeichnet, dass** die Dichtung in den geschlossenen Ventilzuständen durch den frontalen Kontakt zwischen der Innenfläche der Glocke des Absperrorgans und dem freien ringförmigen Rand des Zweigrohrs erfolgt.

6. Ventil nach Anspruch 1, **dadurch gekennzeichnet, dass** das Absperrorgan (10) einen ringförmigen Sitz (13) hat, der sich entlang eines geeigneten Abschnitts in der axialen Richtung auf der der Glocke gegenüberliegenden Seite erstreckt.

7. Ventil nach Anspruch 6, **dadurch gekennzeichnet, dass** der ringförmige Sitz (13) radiale Erhebungen hat.

8. Ventil nach Anspruch 1, **dadurch gekennzeichnet, dass** das Absperrorgan (10) ein Aussengewinde (10b) hat, welches dazu geeignet ist, in das Innengewinde (20b) eines Verbindungsstücks (20) zu passen, welches das Element bildet, welches das Messinstrument mit dem Verteilerkopf (1) verbindet und der Reihe nach mittels einer Schrauben/Mutter-Gewindeverbindung an dem Verteilerkopf befestigt ist.

9. Ventil nach Anspruch 1, **dadurch gekennzeichnet, dass** die Mittel zum Betätigen der Absperrmittel (10,10a) aus einem innen hohlen Stab (30) bestehen, dessen freies Ende ausserhalb des Ventils die abgestufte Skala (43a) des Messinstrumentes (43) aufweist.

10. Ventil nach Anspruch 1, **dadurch gekennzeichnet, dass** das Ende (33) des Stabs (30) im Innern des Verteilerkopfs (1) Längsnuten (30) hat, die zum Ermöglichen eines Zusammenpassens mit entsprechenden ringförmigen Erhebungen (13a) des Absperrorgansitzes (13) geeignet sind.

11. Ventil nach Anspruch 1, **dadurch gekennzeichnet, dass** die Betätigungsmittel (30) und das Absperrorgan (10) mit dem Verteilerkopf (1) mittels eines Verbindungsstücks (20) verbunden sind, das an dem Verteilerkopf mittels einer Verbindung befestigt werden kann, die eine Schraube (20a) und ein Innengewinde (1 b) umfasst.

12. Ventil nach Anspruch 11, **dadurch gekennzeichnet, dass** die Mittel (30) zum Betätigen des Absperrorgans (10) mittels einer Reaktionsunterlegscheibe (32) axial an dem Verbindungsstück (20) eingespannt sind, welche in einen speziellen Sitz in der Abdeckung (21) des Verbindungsstücks eingesetzt ist.

13. Ventil nach Anspruch 1, **dadurch gekennzeichnet, dass** die Öffnungen (12) in der Umfangsoberfläche der Glocke (10a) des Absperrorgans (10) eine im Wesentlichen dreieckige Form haben.

14. Ventil nach Anspruch 13, **dadurch gekennzeichnet, dass** die Öffnungen (12) eine Basis haben, die auf der Seite angeordnet ist, die mit der Ausflussöffnung (2c) des Zweigrohrs (2) korrespondiert.

15. Ventil nach Anspruch 14, **dadurch gekennzeichnet, dass** die Basis der Öffnung (12) einen in der Umfangsrichtung verbreiterten Teil hat.

16. Ventil nach Anspruch 15, **dadurch gekennzeichnet, dass** der verbreiterte Teil der Basis der Öffnung (12) ein gerundetes Profil hat.

## Revendications

1. Vanne pour la régulation et la mesure du débit d'un fluide comprenant :
- une nourrice (1) à travers laquelle s'écoule le fluide,
- une canalisation de dérivation (2, 2b) reliée à la nourrice (1) et s'étendant à l'intérieur de ladite nourrice (1) dans une direction transversale à celle de l'écoulement de fluide, ladite canalisation de dérivation comportant un orifice d'entrée (2b) et un orifice de sortie (2c),
- des moyens (10, 10a) pour fermer l'orifice d'entrée (2b) de la canalisation de dérivation (2), capables de se déplacer axialement, lesdits moyens (10, 10a) comportant un conduit traversant coaxial (14) et étant constitués d'un obturateur (10) ayant une extrémité libre sous la forme d'un embout femelle cylindrique (10a),
- des moyens d'actionnement (30) rotatifs pour déplacer axialement lesdits moyens (10, 10a) afin de fermer l'orifice d'entrée (2b) de la canalisation de dérivation (2), lesdits moyens d'actionnement (30) comprenant une cavité axiale (35) et étant faits d'un matériau transparent,
de telle sorte que ledit embout femelle cylindrique (10a) est déplacé axialement dans une position fermant l'orifice d'entrée (2b) de la canalisation de dérivation (2) par la rotation des moyens d'actionnement (30),
la vanne comprenant en outre des moyens (40, 44, 46) pour détecter la pression exercée par l'écoulement de fluide, comportant :
- des moyens à ressort (46),
- une tige (40) capable de se déplacer axialement, insérée à l'intérieur de la cavité axiale (35) et s'étendant axialement à travers ledit conduit traversant coaxial (14) et à l'intérieur de la canalisation de dérivation (2, 2b), ladite tige (40) étant munie, au niveau de ses extrémités opposées, d'un débitmètre (43) et d'un élément (44) sur lequel l'écoulement de fluide exerce une force, provoquant le déplacement axial de la tige (40) contre l'action des moyens à ressort (46),
la vanne comprenant en outre un instrument (43, 43a) pour mesurer le débit du fluide, comportant :
- le débitmètre (43) et
- une échelle graduée (43a) sur la surface extérieure desdits moyens d'actionnement (30),
**caractérisée en ce que** la surface circonférentielle dudit embout femelle (10a) est munie d'orifices (12) pour l'entrée du fluide depuis la nourrice (1) à l'intérieur de la canalisation de dérivation (2) dans une direction radiale, l'embout femelle (10a) étant déplacé axialement pour ouvrir l'orifice d'entrée (2b) de la canalisation de dérivation (2) par la rotation des moyens d'actionnement (30),
de telle sorte que l'embout femelle (10a) recouvre la surface extérieure de la canalisation de dérivation (2) et la régulation du débit est déterminée par un déplacement axial desdits orifices (12) par rapport à la surface extérieure de la canalisation de dérivation (2).

2. Vanne selon la revendication 1, **caractérisée en ce que** ladite canalisation de dérivation (2) a une forme tronconique.

3. Vanne selon la revendication 2, **caractérisée en ce que** la plus grande base de la canalisation tronconique est disposée du côté où se trouve le refoulement (1 c).

4. Vanne selon la revendication 2, **caractérisée en ce que** la plus grande base de la canalisation tronconique est disposée à l'intérieur de la nourrice (1).

5. Vanne selon la revendication 1, **caractérisée en ce que** l'étanchéité, lorsque la vanne est fermée, est assurée par le contact frontal entre la surface intérieure de l'embout femelle de l'obturateur et le bord annulaire libre de la canalisation de dérivation.

6. Vanne selon la revendication 1, **caractérisée en ce que** ledit obturateur (10) comporte un siège annulaire (13) s'étendant le long d'une section appropriée dans la direction axiale, du côté opposé à l'embout femelle.

7. Vanne selon la revendication 6, **caractérisée en ce que** ledit siège annulaire (13) comporte des saillies radiales.

8. Vanne selon la revendication 1, **caractérisée en ce que** ledit obturateur (10) comporte un filetage externe (10b) capable de coopérer avec le filetage femelle (20b) d'un raccord (20) formant l'élément reliant l'instrument de mesure à la nourrice (1) et fixé à son tour sur ladite nourrice au moyen d'un assemblage par filetage mâle/femelle.

9. Vanne selon la revendication 1, **caractérisée en ce que** lesdits moyens permettant d'actionner les moyens de fermeture (10, 10a) sont constitués d'une queue creuse (30) dont l'extrémité libre située à l'extérieur de la vanne comporte l'échelle graduée (43a) de l'instrument de mesure (43).

10. Vanne selon la revendication 1, **caractérisée en ce que** l'extrémité (33) de la queue (30) située à l'intérieur de la nourrice (1) comporte des rainures longitudinales (30) appropriées pour coopérer avec les saillies annulaires (13a) correspondantes du siège (13) de l'obturateur.

11. Vanne selon la revendication 1, **caractérisée en ce que** lesdits moyens d'actionnement (30) et l'obturateur (10) sont reliés à la nourrice (1) par l'intermédiaire d'un raccord (20) qui peut être fixé à ladite nourrice au moyen d'un assemblage comprenant un filetage mâle (20a) et un filetage femelle (1 b).

12. Vanne selon la revendication 11, **caractérisée en ce que** lesdits moyens (30) permettant d'actionner l'obturateur (10) sont axialement contraints contre ledit raccord (20) par l'intermédiaire d'une rondelle de réaction (32) insérée dans un siège spécifique du cache (21) dudit raccord.

13. Vanne selon la revendication 1, **caractérisée en ce que** lesdits orifices (12) dans la surface circonférentielle de l'embout femelle (10a) de l'obturateur (10) ont une forme essentiellement triangulaire.

14. Vanne selon la revendication 13, **caractérisée en ce que** lesdits orifices (12) présentent une base disposée du côté correspondant à l'orifice de sortie (2c) de la canalisation de dérivation (2).

15. Vanne selon la revendication 14, **caractérisée en ce que** ladite base de l'orifice (12) présente une partie élargie dans le sens circonférentiel.

16. Vanne selon la revendication 15, **caractérisée en ce que** ladite partie élargie de la base de l'orifice (12) présente un profil arrondi.
